# EUROPEAN PATENT SPECIFICATION

(11) **EP 3 926 794 B1**
(45) Date of publication and mention of the grant of the patent: **08.07.2026**
(21) Application number: 19933483.0
(22) Date of filing: 26.12.2019
(51) Int. Cl.: H02K 19/14, H02K 19/10, H02K 1/24

(54) **SELF-STARTING SYNCHRONOUS RELUCTANCE MOTOR AND COMPRESSOR HAVING SAME**
SELBSTSTARTENDER SYNCHRONRELUKTANZMOTOR UND KOMPRESSOR DAMIT
MOTEUR À RÉLUCTANCE SYNCHRONE À DÉMARRAGE AUTOMATIQUE ET COMPRESSEUR ÉQUIPÉ DE CE DERNIER

(30) Priority: 19.06.2019 CN 201910533865
(43) Date of publication of application: 22.12.2021
(73) Proprietor: Gree Electric Appliances, Inc. of Zhuhai, Zhuhai, Guangdong 519070 (CN)
(72) Inventor: CHEN, Bin, Zhuhai, Guangdong 519070 (CN); HU, Yusheng, Zhuhai, Guangdong 519070 (CN); XIAO, Yong, Zhuhai, Guangdong 519070 (CN); SHI, Jinfei, Zhuhai, Guangdong 519070 (CN); YU, Qinhong, Zhuhai, Guangdong 519070 (CN); LI, Xia, Zhuhai, Guangdong 519070 (CN)
(74) Representative: Noble, Nicholas
(86) International application number: PCT/CN2019/128872
(87) International publication number: WO 2020/253200

(56) References cited:
- EP-A1- 3 255 758
- WO-A1-2018/110971
- WO-A1-2019/093928
- CN-A- 1 289 166
- CN-A- 108 110 927
- CN-A- 109 309 415
- CN-A- 110 212 724
- CN-U- 209 805 640
- DE-A1- 10 156 269
- FR-A1- 2 980 056
- JP-B2- 4 627 853
- US-A1- 2012 062 053
- US-A1- 2016 308 428
- US-A1- 2019 165 623

## Description

### TECHNICAL FIELD

The present application relates to the field of compressor device technology, and particularly to a self-starting synchronous reluctance motor and a compressor having the same. The application claims priority to Chinese Patent Application No. 201910533865.7, entitled "Self-Starting Synchronous Reluctance Motor and Compressor Having Same", filed on June 19, 2019.

### BACKGROUND

The self-starting synchronous reluctance motor combines the structural characteristics of an induction motor and a self-starting synchronous reluctance motor, and starts through a torque generated by a squirrel cage induction, and operates in a constant speed through the reluctance torque generated by a difference between *d*-axis inductance and *q*-axis inductance of the rotor, and can be directly connected to the power supply to start the operation. Compared with a self-starting permanent magnet motor, the self-starting synchronous reluctance motor has no rare earth permanent magnet materials and no demagnetization problems, and thus has low cost and good reliability; compared with asynchronous motors, the self-starting synchronous reluctance motor has a high efficiency and a constant speed.

In the prior art, the patent with publication number CN 103208894 A discloses a rotor structure. A periphery side of the rotor is provided with a slot (groove) in a *q*-axis direction, thereby increasing the magnetic resistance in the *q*-axis direction and reducing the inductance in the *q*-axis direction, thereby increasing the difference between *d*-axis inductance and *q*-axis inductance of the rotor, and increasing the torque of the motor. However, the squirrel cage at the groove is cut off, which results in low starting ability of the motor, and the rule of interaction relationship between the groove and the stator tooth slot is not considered in the design of the groove, the effect is not good. The patent with number CN 1255925C provides a cheap and easy-to-start synchronous induction motor and a manufacturing device and method for the synchronous induction motor. The rotor is provided with a *d*-axis in a direction in which the magnetic flux easily flows, and a *q*-axis in a direction in which the magnetic flux is difficult to flow through; at least a pair of slit portions of the magnetic pole protrusions of two poles with 90 degrees in the *q*-axis direction and the *d*-axis direction are provided on the rotor, and a plurality of slot portions are arranged on the peripheral side of the slit portion; and the slit portions and the slot portions are filled with a conductivity material. The slit portions are formed in a linear shape, and the slot portions are arranged radially at equal intervals in the circumferential direction. In this patent, since the slot portions are arranged radially at equal intervals, the direction of the magnetic flux among the slot portions is perpendicular to the rotor surface to flow radially. The slot portions block the flow of the magnetic flux in the *d*-axis direction, especially for the slot portions closer to the *q*-axis, the obstruction of the magnetic flux in the *d*-axis direction is more obvious, and the magnetic flux in the q-axis direction flows more smoothly, so the difference between the *d*-axis and *q*-axis magnetic flux is not obvious, the salient pole ratio is not large, and the motor output and efficiency are insufficient. In addition, the slit portion is made into a linear shape, the rotor center has a shaft hole, and the internal space of the *d*-axis rotor is very large. Accordingly, the internal space of the rotor is not well utilized to provide the slit portions to increase the salient pole ratio of the motor.

The document US 2019/165623 A1 discloses that a motor includes a stator including wound multiphase coils and stator slots that accommodate the multiphase coils, and a rotor provided at an inner side of the stator. Poles are provided in a direction of rotation, and sets of flux barriers are provided on the rotor, each of the poles respectively corresponding to a set of the flux barriers. A ratio between a total number of the stator slots and a product of a total number of poles of the rotor and a phase number of the multiphase coils is a non-integer. With the structure of the motor, a torque ripple is reduced while an output torque is kept unchanged.

The document WO 2018/110971 A1 relates to a line start synchronous reluctance motor and a rotor thereof. To this end, the document provides a line start synchronous reluctance motor comprising: a rotor; a plurality of conductor bars arranged on the side of the outer circumferential portion of the rotor; and magnetic flux barriers formed close to the conductor bars on the inner side of the rotor, wherein the magnetic flux barriers are asymmetrically formed in separate regions of the rotor body, which are arranged to have opposite polarities. Therefore, the document enables the initial starting of the motor to be smoothly performed by improving the characteristics of the motor through the asymmetrical magnetic flux barrier structure without changing the number of conductor bars, which is also advantageous in view of torque ripple characteristics and die casting.

### SUMMARY

The main purpose of this application is to provide a self-starting synchronous reluctance motor and a compressor with the same, so as to solve the problem of low motor efficiency in the prior art.

In order to achieve the above purpose, according to one aspect of the present application, a self-starting synchronous reluctance motor is provided, including: a stator core, an inner circumferential surface of the stator core being provided with a plurality of stator teeth; a rotor core, a magnetic flux blocking portion being provided in a q-axis direction of the rotor core, the magnetic flux blocking portion provided to extend along a circumferential direction of the rotor core, each of two ends of the magnetic flux blocking portion being located in a gap formed between two tooth shoes of two adjacent stator teeth when the q-axis direction of the rotor core is aligned with a center of one of the stator teeth, a projection of the magnetic flux blocking portion on the inner circumferential surface of the stator core in a radial direction of the rotor core covering *N* stator teeth, wherein *N*=*Z*/8, *Z* is a number of the stator teeth, *N* is rounded to an integer value; the magnetic flux blocking portion includes: a q-axis filling slot, provided in the q-axis direction; a first groove, provided on an outer circumferential surface of the rotor core and provided adjacent to a first end of the q-axis filling slot; a second groove, provided on the outer circumferential surface of the rotor core and provided adjacent to a second end of the q-axis filling slot.

Furthermore, the magnetic flux blocking portion is a *q*-axis filling slot provided in the *q*-axis direction, and the *q*-axis filling slot is provided to extend in a circumferential direction of the rotor core.

Furthermore, the first groove, the *q*-axis filling slot and the second groove are arranged symmetrically with respect to the *q*-axis; and cross-segments of the first groove and the second groove are rectangular, elliptical or circular.

Furthermore, a total width of the first groove and the second groove in the circumferential direction of the rotor core is less than a width of the *q*-axis filling slot in the circumferential direction of the rotor core.

Furthermore, a depth of the first groove or the second groove in a radial direction of the rotor core is equal to *H*, wherein 0.5δ≤*H*≤10δ, δ is a width of an air gap between the stator core and the rotor core.

Furthermore, the magnetic flux blocking portion is a third groove provided on the outer circumferential surface of the rotor core, and the third grooves is provided to extend in the circumferential direction of the rotor core.

Furthermore, a maximum depth of the third groove in the radial direction of the rotor core is equal to *H*, wherein 0.5δ≤*H*≤10δ, δ is the width of the air gap between the stator core and the rotor core.

Furthermore, a shape of the third groove is a structure consisting of at least one of a straight-line segment or an arc line segment.

Furthermore, the rotor core is provided with a plurality of slit slots, and both ends of each of the slit slots are provided with filling slots, and an extending direction of a filling slot is parallel or at an angle to a *d*-axis of the rotor core.

Furthermore, a slit slot consists of a partial arc segment or a straight-line segment, the arc segment is arranged to protrude toward a side away from a shaft hole of the rotor core, or, the width of the slit slot is provided to gradually increase along both sides of the *q*-axis.

Furthermore, the slit slot has an arc segment, and a radian of the arc segment of the slit slot is provided to gradually decrease in a radial direction away from the shaft hole of the rotor core.

Furthermore, the slit slot has straight-line segments and an arc segment, the straight-line segments of the slit slot are located at both ends of the arc segment, a length of the straight-line segment is provided to gradually decrease in the radial direction away from the shaft hole of the rotor core.

Furthermore, the straight-line segment of the slit slot extends in the *d*-axis direction.

Furthermore, a width of the slit slot is provided to gradually increase along both sides of the *q*-axis.

Furthermore, a reinforcing rib is provided between an end of the slit slot and a corresponding filling slot, a width of the reinforcing rib is equal to *L4*, wherein 0.5δ≤*L4*≤δ, δ is the width of the air gap between the stator core and the rotor core.

Furthermore, there is a distance *L4* between the filling slot and an outer periphery of the rotor core, and 0.5δ≤*L4*≤δ.

Furthermore, the slit slot and the filling slots at both ends of the slit slot are combined to form a magnetic barrier layer, and there are at least two magnetic barrier layers in the radial direction of the rotor core.

Furthermore, a ratio of a sum of the radial widths of all slit slots in the *q*-axis direction and the radial width of the q-axis filling slot in the *q*-axis direction to an effective core width of the rotor core is equal to *Q1*, and 0.3≤*Q1*≤0*.*6.

Furthermore, all the filling slots and the magnetic flux blocking portion and the slit slots, all the filling slots and the *q*-axis filling slot are filled with a conductive and non-magnetic material.

Furthermore, the filling slot and the *q*-axis filling slot are filled with a conductive and non-magnetic material and to communicate with conductive end rings at both ends of the rotor core to form a squirrel cage structure, and a material of the conductive end ring is the same as the material filling the filling slot and the *q*-axis filling slot.

According to another aspect of the present application, a compressor is provided, including a self-starting synchronous reluctance motor which is mentioned in the above embodiments.

By applying the technical solution of the present application, the magnetic flux blocking portion covers *N* stator teeth in a radial direction of the rotor core and in a projection line facing a side of the stator core, *N=Z*/8, *Z* is a number of the stator teeth, *N* is rounded to an integer value. Accordingly, the difference between the *d*-axis magnetic flux and the *q*-axis magnetic flux can be effectively increased, the reluctance torque of the motor with the rotor structure is increased, and the output torque and efficiency of the motor are improved.

### BRIEF DESCRIPTION OF THE DRAWINGS

The accompanying drawings of the specification forming a part of the application are utilized to provide further understanding of the present application, and the exemplary embodiments and descriptions of the present application are utilized to explain the application, and do not constitute an improper limitation to the present application. In the accompanying drawings:
FIG. 1 is a schematic structure diagram of a self-starting synchronous reluctance motor according to an embodiment I of the present invention;
FIG. 2 is a schematic structure diagram of a self-starting synchronous reluctance motor according to an embodiment II of the present invention;
FIG. 3 is a schematic structure diagram of a self-starting synchronous reluctance motor according to an embodiment III of the present invention;
FIG. 4 is a schematic structure diagram of a self-starting synchronous reluctance motor according to an embodiment IV of the present invention;
FIG. 5 is a comparison diagram of output forces of a self-starting synchronous reluctance motor according to the present application and a motor in the prior art;
FIG. 6 is a schematic diagram of a magnetic circuit of a self-starting synchronous reluctance motor according to an embodiment of the present invention;
FIG. 7 is a schematic diagram of a magnetic circuit of a motor in the prior art;
FIG. 8 is a schematic diagram showing a relationship between different magnetic barrier ratios and a output torque of a motor according to the present application;
FIG. 9 is a schematic structure diagram of a self-starting synchronous reluctance motor according to an embodiment V of the present invention;
FIG. 10 is a schematic structure diagram of a self-starting synchronous reluctance motor according to an embodiment VI of the present invention; and
FIG. 11 is a schematic diagram of a three-dimensional rotor of the self-starting synchronous reluctance motor according to the embodiment IV of the present invention.

The above drawings include the following reference signs:
10, stator core; 11, stator tooth;
20, rotor core; 21, *q*-axis filling slot; 22, first groove; 23, second groove; 24, third groove;
30, slit slot;
40, filling slot;
50, reinforcing rib.

### DETAILED DESCRIPTION

It should be noted that the embodiments in the present application and the features in the embodiments can be combined with each other if there is no conflict. Hereinafter, the present application will be described in detail with reference to the accompanying drawings and in conjunction with the embodiments.

It should be noted that the terms used here are merely for describing specific embodiments, and are not intended to limit the exemplary embodiments according to the present application. As used herein, unless the context clearly indicates otherwise, the singular form is also intended to include the plural form. In addition, it should also be understood that when the terms "comprising" and/or "including" are used in this specification, they indicate that there exist features, steps, operations, devices, components, and/or combinations thereof.

It should be noted that the terms "first" and "second", etc., in the description, claims and drawings of the present application are utilized to distinguish similar objects, and are not definitely utilized to describe a specific sequence or order. It should be understood that the terms used in this way can be interchanged under appropriate circumstances, so that the embodiments of the present invention described herein can be implemented in an order other than those illustrated or described herein. In addition, the terms "including" and "having" and any transformations thereof are intended to cover non-exclusive inclusions. For example, a process, a method, a system, a product, or a device that includes a series of steps or units is not definitely limited to those clearly listed steps or units, but may include other steps or units that are not clearly listed or are inherent to these processes, methods, products, or devices.

For ease of description, spatial relative terms can be used here, such as "above", "over", "on an upper surface", "on", etc., to describe a spatial position relationship between one device or feature and other devices or features as shown in the figures. It should be understood that the spatial relative terms are intended to include different orientations in use or operation other than the orientation of the device described in the figures. For example, if the device in the figures is inverted, then the device described as "above the other device or structure" or "over the other device or structure" will then be positioned as "below the other device or structure" or "under other devices or structures". Thus, the exemplary term "above" can include both orientations "above" and "below". The device can also be positioned in other different manners (such as being rotated by 90 degrees or in other orientations), and the relative description of the space used here will be explained accordingly.

Now, exemplary embodiments of the present invention will be described in more detail with reference to the accompanying drawings. However, these exemplary embodiments can be implemented in a variety of different forms, and should not be construed as being limited to the embodiments set forth herein. It should be understood that these embodiments are provided to make the disclosure of this application thorough and complete, and to fully convey the concept of these exemplary embodiments to those of ordinary skill in the art. In the drawings, for clarity, the thicknesses of the layers and regions may be enlarged, and the same reference numerals are utilized to denote the same devices, so their descriptions will be omitted.

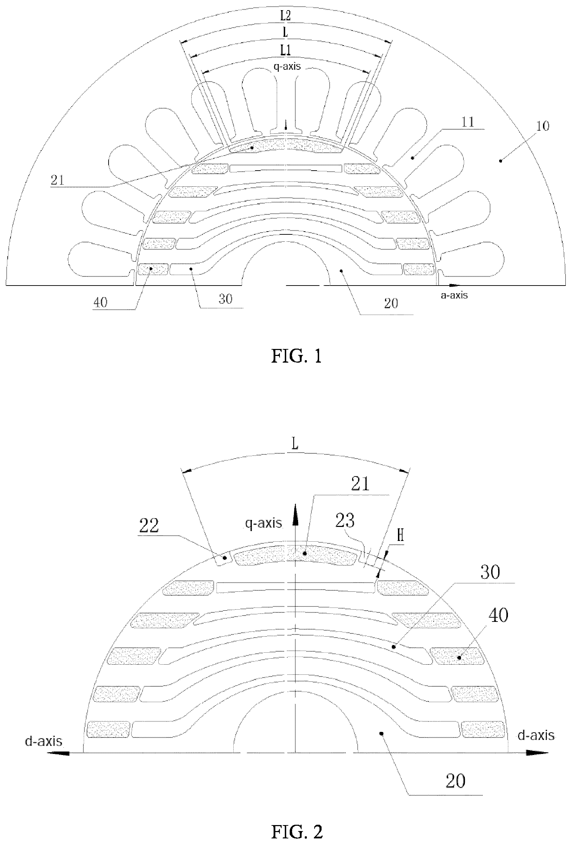

As shown in FIG. 1 to FIG. 11, according to an embodiment of the present application, a self-starting synchronous reluctance motor is provided.

Specifically, as shown in FIG. 1, the motor includes a stator core 10 and a rotor core 20. A plurality of stator teeth 11 are provided on an inner circumferential surface of the stator core 10. A magnetic flux blocking portion is provided in a *q*-axis direction of the rotor core 20, and the magnetic flux blocking portion is provided to extend along the circumferential direction of the rotor core 20. Each of two ends of the magnetic flux blocking portion is located in a gap formed between two tooth shoes of two adjacent stator teeth 11; the magnetic flux blocking portion covers *N* stator teeth 11 in a radial direction of the rotor core 20 and in a projection line facing a side of the stator core 10, where *N*=*Z*/8, *Z* is the number of the stator teeth 11, *N* is rounded to an integer value.

In this embodiment, the magnetic flux blocking portion covers *N* stator teeth 11 along a radial direction of the rotor core 20 towards a projection line at a side of the stator core 10, where *N*=*Z*/8, and *Z* is the number of the stator teeth 11, *N* is rounded to an integer value. The difference between the magnetic flux in the *d*-axis direction and the magnetic flux in the *q*-axis direction can be effectively increased, the reluctance torque of the motor with such rotor structure is increased, and the output torque and efficiency of the motor is improved.

The magnetic flux blocking portion is a *q*-axis filling slot 21 provided in the *q*-axis direction, and the *q*-axis filling slot 21 extends along the circumferential direction of the rotor core 20. In this way, the *q*-axis filling slot 21 can form a magnetic barrier structure, and such arrangement can increase the difference between the magnetic flux in the *q*-axis direction and the magnetic flux in the *d*-axis direction, thereby increasing the rotating torque of the motor.

According to an embodiment of the present invention, as shown in FIG. 2, the magnetic flux blocking portion includes a *q*-axis filling slot 21, a first groove 22 and a second groove 23. The *q*-axis filling slot 21 is provided in the *q*-axis direction. The first groove 22 is provided on an outer circumferential surface of the rotor core 20, and the first groove 22 is arranged adjacent to the first end of the *q*-axis filling slot 21. The second groove 23 is provided on the outer circumferential surface of the rotor core 20, and the second groove 23 is arranged adjacent to the second end of the *q*-axis filling slot 21. The first groove 22, the *q*-axis filling slot 21, and the second groove 23 are symmetrically arranged with respect to the *q*-axis. A total width of the first groove 22 and the second groove 23 in the circumferential direction of the rotor is less than a width of the *q*-axis filling slot 21 in the circumferential direction of the rotor. Such arrangement can also reduce the torque pulsation of the motor and improve the efficiency of the motor, and meanwhile can contribute to improve the starting ability of the motor. The first groove 22 and the second groove 23 may have various shapes such as a rectangle, a circle, or an ellipse, etc.

In order to further improve the efficiency of the motor, the depth of the first groove 22 and the second groove 23 in the radial direction of the rotor core 20 can be set to *H*, where 0.5δ≤*H*≤10δ, and δ is a width of an air gap between the stator core 10 and the rotor core 20.

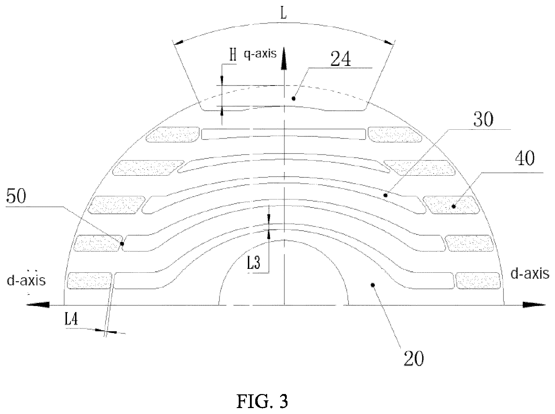

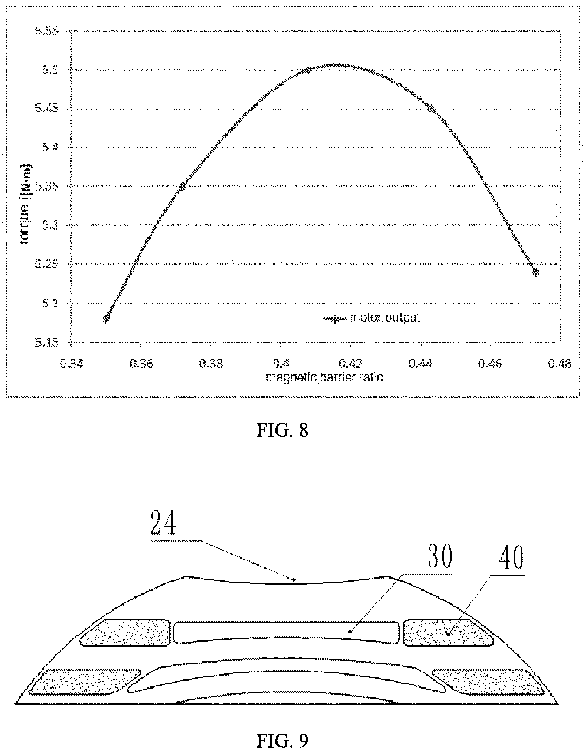

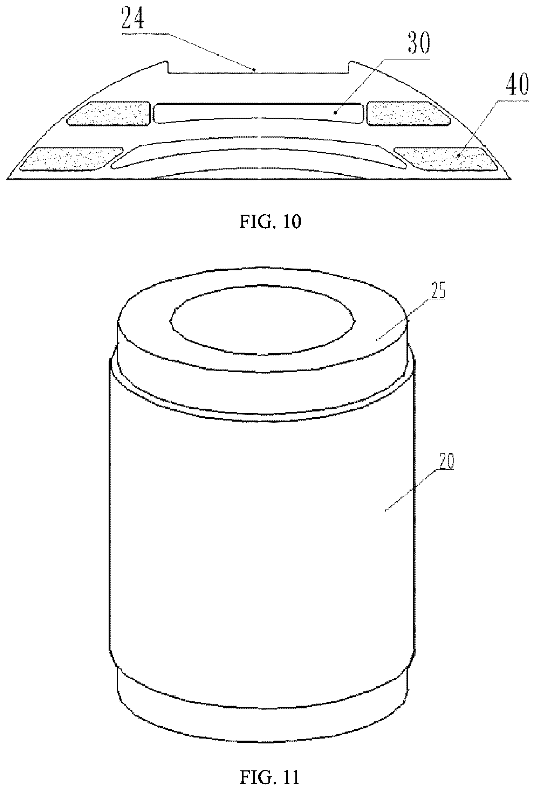

In the embodiment shown in FIG. 3, the magnetic flux blocking portion is a third groove 24 provided on the outer circumferential surface of the rotor core 20, and the third groove 24 extends along the circumferential direction of the rotor core 20. The shape of the third groove 24 is not limited, and can be a variety of structures consisting of at least one of a straight-line segment and an arc line segment, as shown in FIG. 9 and FIG. 10. A maximum depth of the third groove 24 along the radial direction of the rotor core 20 is *H*, where 0.5δ≤*H*≤10δ, and δ is the width of the air gap between the stator core 10 and the rotor core 20. Such arrangement can also reduce the torque pulsation of the motor and improve the efficiency of the motor.

Furthermore, the rotor core 20 is provided with a plurality of slit slots 30, and both ends of each slit slot 30 are provided with a filling slot 40 to form a magnetic barrier layer. The extending direction of the filling slot 40 is parallel to the *d*-axis of the rotor core 20 or arranged at an angle, and the angle is smaller, such that the extending direction of the filling slot 40 is substantially parallel to the *d*-axis. The slit slot 30 consists of a partial arc line segment and/or a straight-line segment; and the arc segment is arranged to protrude toward a side away from a shaft hole of the rotor core 20. A radian of the arc line of the slit slot 30 gradually decreases in the radial direction away from the shaft hole of the rotor core 20. The straight-line segments at both ends of the slit slot 30 generally extend along the *d-*axis direction. A length of the straight-line segment gradually decreases in the radial direction away from the shaft hole of the rotor core 20, and there is even no straight-line segment. The width of the slit slot 30 is gradually increased along both sides of the *q*-axis. A reinforcing rib 50 is provided between an end of the slit slot 30 and a corresponding filling slot 40 thereof. The width of the reinforcing rib 50 is *L4*, where 0.5δ≤*L4*≤δ, and δ is the width of the air gap between the stator core 10 and the rotor core 20. Such arrangement can effectively use the rotor space, increase the motor inductance difference, improve the efficiency of the motor, and increase the practicability of the motor.

Further, the slit slot 30 and the filling slots 40 at both ends of the slit slot 30 are combined to form a magnetic barrier layer, and the magnetic barrier layer has at least two layers in the radial direction of the rotor. A ratio of the sum of the radial widths of all slit slots 30 in the *q*-axis direction and the radial width of the *q*-axis filling slot 21 in the *q-*axis direction to an effective core width in the radial direction of the rotor is equal to *Q1*, where 0.3≤*Q1*≤0.6. More preferably, the ratio is in a range of 0.38 to 0.45, and an appropriate magnetic barrier ratio is set in this way to avoid magnetic field saturation and effectively increase the output torque of the motor. As shown in FIG. 8, when the magnetic barrier ratio is about 0.42, the motor output is the largest; and the magnetic barrier ratio is too large or too small, the motor output may decrease, accordingly a suitable magnetic barrier ratio has a greater impact on the motor output. The effective core width refers to the width from an inner circumference of the shaft hole of the rotor to an outer edge of the rotor core.

All the filling slots 40, the magnetic flux blocking portion and the slit slots 30, all the filling slots 40 and the *q*-axis filling slot 21 are filled with conductive and non-magnetic materials. Preferably, the conductive and non-magnetic material is aluminum or aluminum alloy. The filling slot 40 and the *q*-axis filling slot 21 are filled with the conductive and non-magnetic material to communicate with conductive end rings 25 at both ends of the rotor core to form a squirrel cage structure. The material of the conductive end ring 25 is the same as the material that fills the filling slot 40 and the *q*-axis filling slot 21. The magnetic barrier layer is provided to hinder the *q*-axis magnetic flux, increase the difference between the *d*-axis inductance and the *q*-axis inductance of the motor, and improve the efficiency of the motor. A suitable squirrel cage structure is designed to help the motor achieve asynchronous starting and improve the motor starting ability.

The motor mechanism in the above embodiment can also be applied in the field of compressor device technology, that is, according to another aspect of the present application, a compressor is provided. The compressor includes a self-starting synchronous reluctance motor, and the self-starting synchronous reluctance motor is the above-mentioned self-starting synchronous reluctance motor.

Specifically, the rotor structure and the motor of the self-starting synchronous reluctance motor provided in the present application can increase the difference between the *d*-axis magnetic flux and the *q*-axis magnetic flux, solve the problems of low efficiency and low speed of the asynchronous motor, and improve the output power and efficiency of the motor. The motor is a self-starting synchronous reluctance 2-pole motor, which includes a stator core formed by stacking stator punching sheets and a rotor core formed by stacking rotor punching sheets with a specific structure. The rotor punching sheet is provided with multiple groups of slit slots and filling slots, a *q*-axis filling slot, and a central shaft hole matched with the rotating shaft. A magnetic flux blocking portion is provided on an outer circumference of the rotor punching sheet in the *q*-axis direction. A total circumferential width of the magnetic flux blocking portion is equal to *L*, which is greater than an outer width of *N* stator teeth, and is less than an inner width of *N+2* stator teeth, in which the inner width is calculated as an inner width from one stator tooth located on the left of the *N* stator teeth to one stator tooth located on the right of the *N* stator teeth; *N=Z*/*8, Z* is the number of stator teeth, and *N* is rounded to an integer.

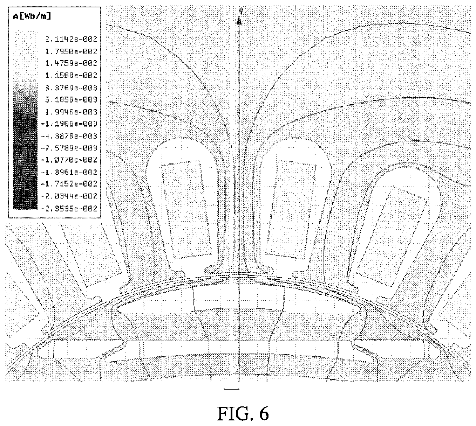

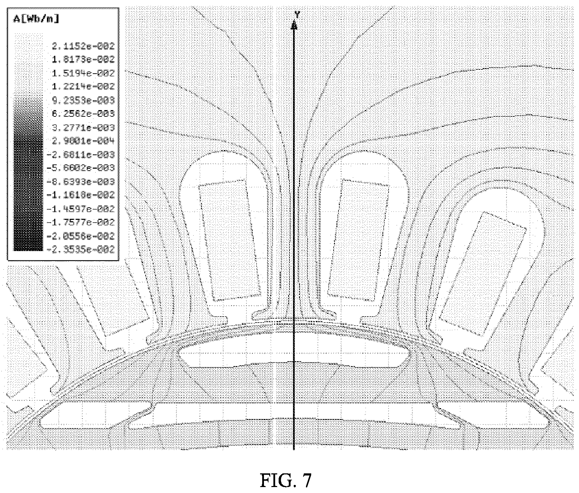

A 24-slot stator is taken as an example, at this time *N*=*Z*/8=24/8=3, then the total circumferential width *L* of the magnetic flux blocking portion is greater than the outer width of three stator teeth, such as *L1* shown in FIG. 1, and is less than the inner width of five stator teeth, such as *L2* shown in FIG. 1, that is, *L* satisfies *L1<L<L2.* FIGS. 6 and 7 show the comparison of the influence of the magnetic flux blocking portion on the *q*-axis magnetic field. When the total circumferential width *L* of the magnetic flux blocking portion is smaller, a large amount of magnetic fluxes enters the three stator teeth in the *q-*axis direction from both sides of the magnetic flux blocking portion, as shown in FIG. 7, the *q*-axis magnetic flux is larger. When *L* satisfies *L1<L<L2,* the magnetic flux blocking portion can block three stator teeth, which effectively increases the magnetic resistance in the *q*-axis direction, and greatly reduce the magnetic flux entering the three stator teeth in the *q*-axis direction, as shown in FIG. 6, accordingly a good effect of reducing magnetic flux is implemented.

The magnetic flux blocking portion may be a linear q-axis filling slot extending along the *d*-axis direction, and the width thereof is equal to the width *L* of the *q-*axis filling slot, as shown in FIG. 1, satisfying *L1<L<L2.* The magnetic flux blocking portion can also be formed by one linear filling slot and two grooves, and the width *L* thereof is the maximum width between outermost edges of the two grooves, as shown in FIG. 2, which satisfies *L1<L<L2*. At this time, the *q*-axis filling slot is located between the two grooves, and the two grooves are arranged symmetrically with respect to the *q*-axis. Of course, as shown in FIG. 3, the magnetic flux blocking portion is a large groove, and the width *L* thereof is the width between both sides of the large groove, which satisfies *L1<L<L2*.

For different magnetic flux blocking portion in the above-mentioned embodiments, the width *L* of the magnetic flux blocking portion all satisfies *L1<L<L2*, which can achieve the effects of increasing the magnetic resistance in the *q*-axis direction and reducing the *q*-axis magnetic flux, which increases the difference between the *d*-axis magnetic flux and the *q*-axis magnetic flux, and eventually increases the reluctance torque and the efficiency of the motor.

If the width of the magnetic flux blocking portion is too large, the effect of reducing the *q*-axis magnetic flux is obvious, but the number of stator teeth in the *d*-axis direction is less, the stator teeth are saturated, and the *d*-axis magnetic flux is reduced, so that the *d* and *q*-axis magnetic fluxes do not increase, and the effect is not achieved. Therefore, circumferential radial depths of the groove and the large groove can be set to *H*, which satisfies 0.5δ≤*H*≤10δ, where δ is the width of the air gap between the stator core and the rotor core. More preferably, 2δ≤*H*≤5δ, such arrangement ensures that the magnetic resistance of the magnetic flux blocking portion is large enough to reduce the *q*-axis magnetic flux.

Further, the extending directions of the filling slots at both ends of the slit slot are substantially parallel to the *d*-axis, so that the *d*-axis magnetic flux can flow smoothly in the *d*-axis direction. The filling slots are located at both ends of the slit slot and are symmetrical with respect to the *d*-axis or the *q*-axis. The slit slot consists of an arc segment or a straight-line segment and a circular arc segment; and the radian of the circular arc of the slit slot gradually decreases in the direction away from the center of the rotating shaft. The extending direction of the straight-line segment of the slit slot is approximately parallel to the *d*-axis. The circular arc of the slit slot protrudes toward a side away from the center of the rotating shaft; the slit width of the slit slot in the *q*-axis direction is equal to *L3,* and the width *L3* of the slit slot gradually increases from the *q*-axis to both sides. In this way, the rotor space is effectively used, the magnetic flux saturation is reduced, and the *d*-axis magnetic flux is increased.

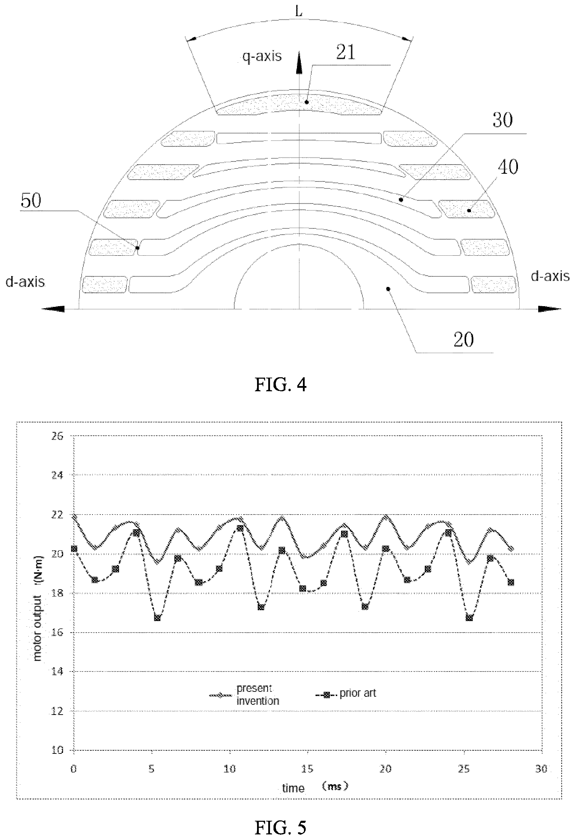

There is a division rib between the filling slot and the corresponding slit slot, which has the width of *L4*, satisfying: 0.5δ≤*L4*≤δ. A suitable division rib is provided to divide the slit slot from the filling slot, while ensuring a certain width, ensuring the mechanical strength and reducing the *q*-axis magnetic flux leakage. The filling slot and the corresponding slit slot are combined to form a magnetic barrier layer. There are at least two magnetic barrier layer arranged in the radial direction of the rotor to increase the saliency of the motor, increase the reluctance torque, and improve the efficiency. In all filling slots, *q*-axis filling slot and slit slots, at least all filling slots and *q*-axis filling slot are filled with conductive and non-magnetic materials. Preferably, the conductive and non-magnetic material is aluminum or aluminum alloy. FIG. 5 shows a comparison between torque curves in the technical solution of the present application and the prior art. The average torque in the technical solution of the present application is significantly increased, and thus the technical solution of the present application has a significant effect.

In addition to the above, it should be noted that "an embodiment", "another embodiment", "embodiment", etc., referred to in this specification refer to that specific features, structures, or features described in conjunction with the embodiment are included in at least one embodiment described generally in this application. The same expression in multiple places in the specification does not necessarily refer to the same embodiment. Furthermore, when describing a specific feature, structure, or feature in combination with any embodiment, it is claimed that the combination of other embodiments to implement such feature, structure, or feature also falls within the scope of the present application.

In the above-mentioned embodiments, the description of each embodiment has its own emphasis. For parts that are not described in detail in an embodiment, reference can be made to the related descriptions of other embodiments.

The foregoing descriptions are only preferred embodiments of the application, and are not intended to limit the application. For those skilled in the art, the application can have various modifications and transformations. Any modification, equivalent replacement, improvement, etc., made within the scope of the appended claims shall be included in the protection scope of this application.

## Claims

1. A self-starting synchronous reluctance motor, comprising:
a stator core (10), an inner circumferential surface of the stator core (10) being provided with a plurality of stator teeth (11);
a rotor core (20), a magnetic flux blocking portion being provided in a q-axis direction of the rotor core (20), the magnetic flux blocking portion provided to extend along a circumferential direction of the rotor core (20), each of two ends of the magnetic flux blocking portion being located in a gap formed between two tooth shoes of two adjacent stator teeth (11) when the q-axis direction of the rotor core (20) is aligned with a center of one of the stator teeth (11), a projection of the magnetic flux blocking portion on the inner circumferential surface of the stator core (10) in a radial direction of the rotor core (20) covering *N* stator teeth (11), wherein *N=Z*/8, *Z* is a number of the stator teeth (11), *N* is rounded to an integer value;
**characterized in that** the magnetic flux blocking portion comprises:
a *q*-axis filling slot (21), provided in the *q*-axis direction;
a first groove (22), provided on an outer circumferential surface of the rotor core (20) and provided adjacent to a first end of the *q*-axis filling slot (21);
a second groove (23), provided on the outer circumferential surface of the rotor core (20) and provided adjacent to a second end of the *q*-axis filling slot (21).

2. The self-starting synchronous reluctance motor according to claim 1, wherein the magnetic flux blocking portion is a *q*-axis filling slot (21) provided in the *q*-axis direction, and the *q*-axis filling slot (21) is provided to extend in a circumferential direction of the rotor core (20).

3. The self-starting synchronous reluctance motor according to claim 1, wherein the first groove (22), the *q*-axis filling slot (21) and the second groove (23) are arranged symmetrically with respect to the *q*-axis; and cross-segments of the first groove (22) and the second groove (23) are rectangular, elliptical or circular.

4. The self-starting synchronous reluctance motor according to claim 1, wherein a total width of the first groove (22) and the second groove (23) in the circumferential direction of the rotor core (20) is less than a width of the *q*-axis filling slot (21) in the circumferential direction of the rotor core (20).

5. The self-starting synchronous reluctance motor according to claim 1 or 3, wherein a depth of the first groove (22) or the second groove (23) in a radial direction of the rotor core (20) is equal to *H*, wherein 0.5δ≤*H*≤10δ, δ is a width of an air gap between the stator core (10) and the rotor core (20).

6. The self-starting synchronous reluctance motor according to claim 1, wherein the magnetic flux blocking portion is a third groove (24) provided on the outer circumferential surface of the rotor core (20), and the third grooves (24) is provided to extend in the circumferential direction of the rotor core (20);
wherein a maximum depth of the third groove (24) in the radial direction of the rotor core (20) is equal to *H*, wherein 0.5δ≤*H*≤10δ, δ is the width of the air gap between the stator core (10) and the rotor core (20);
wherein a shape of the third groove (24) is a structure consisting of at least one of a straight-line segment or an arc segment.

7. The self-starting synchronous reluctance motor according to claim 1, wherein the rotor core (20) is provided with a plurality of slit slots (30), and both ends of each of the slit slots (30) are provided with filling slots (40), and an extending direction of a filling slot (40) is parallel or at an angle to a *d*-axis of the rotor core (20);
wherein a slit slot (30) consists of a partial arc segment or a straight-line segment, the arc segment is arranged to protrude toward a side away from a shaft hole of the rotor core (20), or, the width of the slit slot (30) is provided to gradually increase along both sides of the *q*-axis;
wherein a width of the slit slot (30) is provided to gradually increase along both sides of the *q*-axis;
wherein a reinforcing rib (50) is provided between an end of the slit slot (30) and a corresponding filling slot (40), a width of the reinforcing rib (50) is equal to *L4*, wherein 0.5δ≤*L4*≤δ, δ is the width of the air gap between the stator core (10) and the rotor core (20);
wherein there is a distance *L4* between the filling slot (40) and an outer periphery of the rotor core (20), and 0.5δ≤*L4*≤δ;
wherein the slit slot (30) and the filling slots (40) at both ends of the slit slot (30) are combined to form a magnetic barrier layer, and there are at least two magnetic barrier layers in the radial direction of the rotor core (20);
wherein a ratio of a sum of the radial widths of all slit slots (30) in the *q*-axis direction and the radial width of the *q*-axis filling slot (21) in the *q*-axis direction to an effective core width of the rotor core (20) is equal to *Q1*, and 0.3≤*Q1*≤0.6;
wherein all the filling slots (40) and the magnetic flux blocking portion and the slit slots (30), all the filling slots (40) and the *q*-axis filling slot (21) are filled with a conductive and non-magnetic material.

8. The self-starting synchronous reluctance motor according to claim 7, wherein the slit slot (30) has an arc segment, and a radian of the arc segment of the slit slot (30) is provided to gradually decrease in a radial direction away from the shaft hole of the rotor core (20).

9. The self-starting synchronous reluctance motor according to claim 7, wherein the slit slot (30) has straight-line segments and an arc segment, the straight-line segments of the slit slot (30) are located at both ends of the arc segment, a length of the straight-line segment is provided to gradually decrease in the radial direction away from the shaft hole of the rotor core (20);
wherein the straight-line segment of the slit slot (30) extends in the *d*-axis direction.

10. The self-starting synchronous reluctance motor according to claim 7, wherein the filling slot (40) and the *q*-axis filling slot (21) are filled with a conductive and non-magnetic material and to communicate with conductive end rings (25) at both ends of the rotor core to form a squirrel cage structure, and a material of the conductive end ring (25) is the same as the material filling the filling slot (40) and the *q*-axis filling slot (21).

11. The self-starting synchronous reluctance motor according to claim 7, wherein the slit slot (30) consists of a partial arc segment and a straight-line segment, the arc segment is arranged to protrude toward a side away from a shaft hole of the rotor core (20), the width of the slit slot (30) is provided to gradually increase along both sides of the *q*-axis.

12. The self-starting synchronous reluctance motor according to claim 7, wherein the slit slot (30) consists of a partial arc segment and a straight-line segment, and the arc segment is arranged to protrude toward a side away from a shaft hole of the rotor core (20).

13. The self-starting synchronous reluctance motor according to claim 1 or 3, wherein depths of the first groove (22) and the second groove (23) in a radial direction of the rotor core (20) is equal to *H*, 0.5δ≤*H*≤10δ, δ is the width of the air gap between the stator core (10) and the rotor core (20).

14. A compressor, comprising a self-starting synchronous reluctance motor, **characterized in that** the self-starting synchronous reluctance motor is the self-starting synchronous reluctance motor according to any one of claims 1 to 13.

## Patentansprüche

1. Selbststartender Synchronreluktanzmotor, umfassend:
einen Statorkern (10), wobei eine Innenumfangsfläche des Statorkerns (10) mit mehreren Statorzähnen (11) versehen ist;
einen Rotorkern (20), wobei ein Magnetflusssperrabschnitt in einer q-Achsenrichtung des Rotorkerns (20) vorgesehen ist, wobei der Magnetflusssperrabschnitt so vorgesehen ist, dass er sich entlang einer Umfangsrichtung des Rotorkerns (20) erstreckt, wobei sich jedes von zwei Enden des Magnetflusssperrabschnitts in einem Spalt befindet, der zwischen zwei Zahnfüßen zweier benachbarter Statorzähne (11) gebildet ist, wenn die q-Achsenrichtung des Rotorkerns (20) mit einer Mitte eines der Statorzähne (11) ausgerichtet ist, wobei eine Projektion des Magnetflusssperrabschnitts auf die Innenumfangsfläche des Statorkerns (10) in einer radialen Richtung des Rotorkerns (20) N Statorzähne (11) bedeckt, wobei N=Z/8,
wobei Z eine Anzahl der Statorzähne (11) ist, wobei N auf einen ganzzahligen Wert gerundet wird;
**dadurch gekennzeichnet, dass** der Magnetflusssperrabschnitt Folgendes umfasst:
eine q-Achsen-Füllnut (21), die in der q-Achsenrichtung vorgesehen ist;
eine erste Nut (22), die auf einer Außenumfangsfläche des Rotorkerns (20) vorgesehen und angrenzend an ein erstes Ende der q-Achsen-Füllnut (21) vorgesehen ist;
eine zweite Nut (23), die auf der Außenumfangsfläche des Rotorkerns (20) vorgesehen und angrenzend an ein zweites Ende der q-Achsen-Füllnut (21) vorgesehen ist.

2. Selbststartender Synchronreluktanzmotor nach Anspruch 1, wobei der Magnetflusssperrabschnitt eine in der q-Achsenrichtung vorgesehene q-Achsen-Füllnut (21) ist und die q-Achsen-Füllnut (21) so vorgesehen ist, dass sie sich in einer Umfangsrichtung des Rotorkerns (20) erstreckt.

3. Selbststartender Synchronreluktanzmotor nach Anspruch 1, wobei die erste Nut (22), die q-Achsen-Füllnut (21) und die zweite Nut (23) in Bezug auf die q-Achse symmetrisch angeordnet sind; und Quersegmente der ersten Nut (22) und der zweiten Nut (23) rechteckig, elliptisch oder kreisförmig sind.

4. Selbststartender Synchronreluktanzmotor nach Anspruch 1, wobei eine Gesamtbreite der ersten Nut (22) und der zweiten Nut (23) in der Umfangsrichtung des Rotorkerns (20) kleiner ist als eine Breite der q-Achsen-Füllnut (21) in der Umfangsrichtung des Rotorkerns (20).

5. Selbststartender Synchronreluktanzmotor nach Anspruch 1 oder 3, wobei eine Tiefe der ersten Nut (22) oder der zweiten Nut (23) in einer radialen Richtung des Rotorkerns (20) gleich H ist, wobei 0,5 δ ≤ H ≤ 10 δ, wobei δ eine Breite eines Luftspalts zwischen dem Statorkern (10) und dem Rotorkern (20) ist.

6. Selbststartender Synchronreluktanzmotor nach Anspruch 1, wobei der Magnetflusssperrabschnitt eine dritte Nut (24) ist, die auf der Außenumfangsfläche des Rotorkerns (20) vorgesehen ist, und die dritten Nuten (24) so vorgesehen sind, dass sie sich in der Umfangsrichtung des Rotorkerns (20) erstrecken;
wobei eine maximale Tiefe der dritten Nut (24) in der radialen Richtung des Rotorkerns (20) gleich H ist, wobei 0,5 δ ≤ H ≤ 10 δ, wobei δ die Breite des Luftspalts zwischen dem Statorkern (10) und dem Rotorkern (20) ist; wobei eine Form der dritten Nut (24) eine Struktur ist, die aus mindestens einem geradlinigen Segment oder einem Bogensegment besteht.

7. Selbststartender Synchronreluktanzmotor nach Anspruch 1, wobei der Rotorkern (20) mit mehreren Langnuten (30) versehen ist und beide Enden jeder der Langnuten (30) mit Füllnuten (40) versehen sind und eine Erstreckungsrichtung einer Füllnut (40) parallel oder in einem Winkel zu einer d-Achse des Rotorkerns (20) verläuft;
wobei eine Langnut (30) aus einem Teilbogensegment oder einem geradlinigen Segment besteht, wobei das Bogensegment so angeordnet ist, dass es in Richtung einer von einer Wellenbohrung des Rotorkerns (20) abgewandten Seite vorsteht, oder die Breite der Langnut (30) so vorgesehen ist, dass sie sich entlang beider Seiten der q-Achse allmählich vergrößert;
wobei eine Breite der Langnut (30) so vorgesehen ist, dass sie sich entlang beider Seiten der q-Achse allmählich vergrößert;
wobei eine Verstärkungsrippe (50) zwischen einem Ende der Langnut (30) und einer entsprechenden Füllnut (40) vorgesehen ist, wobei eine Breite der Verstärkungsrippe (50) gleich L4 ist, wobei 0,5 δ ≤ L4 ≤ δ, wobei δ die Breite des Luftspalts zwischen dem Statorkern (10) und dem Rotorkern (20) ist;
wobei ein Abstand L4 zwischen der Füllnut (40) und einem Außenumfang des Rotorkerns (20) vorhanden ist und 0,5 δ ≤ L4 ≤ δ;
wobei die Langnut (30) und die Füllnuten (40) an beiden Enden der Langnut (30) zu einer magnetischen Barriereschicht kombiniert sind und mindestens zwei magnetische Barriereschichten in der radialen Richtung des Rotorkerns (20) vorhanden sind;
wobei ein Verhältnis einer Summe der radialen Breiten aller Langnuten (30) in der q-Achsenrichtung und der radialen Breite der q-Achsen-Füllnut (21) in der q-Achsenrichtung zu einer effektiven Kernbreite des Rotorkerns (20) gleich Q1 ist und 0,3 ≤ Q1 ≤ 0,6;
wobei alle Füllnuten (40) und der Magnetflusssperrabschnitt und die Langnuten (30), alle Füllnuten (40) und die q-Achsen-Füllnut (21) mit einem leitfähigen und nicht-magnetischen Material gefüllt sind.

8. Selbststartender Synchronreluktanzmotor nach Anspruch 7, wobei die Langnut (30) ein Bogensegment aufweist und ein Bogenmaß des Bogensegments der Langnut (30) so vorgesehen ist, dass es sich in einer radialen Richtung von der Wellenbohrung des Rotorkerns (20) weg allmählich verringert.

9. Selbststartender Synchronreluktanzmotor nach Anspruch 7, wobei die Langnut (30) geradlinige Segmente und ein Bogensegment aufweist, wobei die geradlinigen Segmente der Langnut (30) an beiden Enden des Bogensegments angeordnet sind, wobei eine Länge des geradlinigen Segments so vorgesehen ist, dass sie sich in der radialen Richtung von der Wellenbohrung des Rotorkerns (20) weg allmählich verringert;
wobei sich das geradlinige Segment der Langnut (30) in der d-Achsenrichtung erstreckt.

10. Selbststartender Synchronreluktanzmotor nach Anspruch 7, wobei die Füllnut (40) und die q-Achsen-Füllnut (21) mit einem leitfähigen und nicht-magnetischen Material gefüllt sind und mit leitfähigen Endringen (25) an beiden Enden des Rotorkerns kommunizieren, um eine Dämpferkäfigstruktur zu bilden, und ein Material des leitfähigen Endrings (25) das gleiche wie das Material ist, das die Füllnut (40) und die q-Achsen-Füllnut (21) füllt.

11. Selbststartender Synchronreluktanzmotor nach Anspruch 7, wobei die Langnut (30) aus einem Teilbogensegment und einem geradlinigen Segment besteht, wobei das Bogensegment so angeordnet ist, dass es in Richtung einer von einer Wellenbohrung des Rotorkerns (20) abgewandten Seite vorsteht, wobei die Breite der Langnut (30) so vorgesehen ist, dass sie sich entlang beider Seiten der q-Achse allmählich vergrößert.

12. Selbststartender Synchronreluktanzmotor nach Anspruch 7, wobei die Langnut (30) aus einem Teilbogensegment und einem geradlinigen Segment besteht und das Bogensegment so angeordnet ist, dass es in Richtung einer von einer Wellenbohrung des Rotorkerns (20) abgewandten Seite vorsteht.

13. Selbststartender Synchronreluktanzmotor nach Anspruch 1 oder 3, wobei die Tiefen der ersten Nut (22) und der zweiten Nut (23) in einer radialen Richtung des Rotorkerns (20) gleich H ist, wobei 0,5 δ ≤ H ≤ 10 5, wobei δ die Breite des Luftspalts zwischen dem Statorkern (10) und dem Rotorkern (20) ist.

14. Kompressor, umfassend einen selbststartenden Synchronreluktanzmotor, **dadurch gekennzeichnet, dass** der selbststartende Synchronreluktanzmotor der selbststartende Synchronreluktanzmotor nach einem der Ansprüche 1 bis 13 ist.

## Revendications

1. Moteur à réluctance synchrone à démarrage automatique, comprenant :
un noyau de stator (10), une surface circonférentielle intérieure du noyau de stator (10) étant pourvue d'une pluralité de dents de stator (11) ;
un noyau de stator (20), une partie de blocage de flux magnétique étant prévue dans une direction d'axe q du noyau de stator (20), la partie de blocage de flux magnétique étant prévue pour s'étendre le long d'une direction circonférentielle du noyau de stator (20), chacune de deux extrémités de la partie de blocage de flux magnétique étant située dans un intervalle formé entre deux emplantures de dent de deux dents de stator adjacentes (11) lorsque la direction d'axe q du noyau de stator (20) est alignée avec un centre d'un des dents de stator (11), une saillie de la partie de blocage de flux magnétique sur la surface circonférentielle intérieure du noyau de stator (10) dans une direction radiale du noyau de stator (20) couvrant N dents de stator (11), dans lequel N=Z/8, Z est un nombre des dents de stator (11), N est arrondi à une valeur entière ;
**caractérisé en ce que** la partie de blocage de flux magnétique comprend :
une fente de remplissage d'axe q (21), prévue dans la direction d'axe q ;
une première rainure (22), prévue sur une surface circonférentielle extérieure du noyau de stator (20) et prévue de façon adjacente à une première extrémité de la fente de remplissage d'axe q (21) ;
une deuxième rainure (23), prévue sur la surface circonférentielle extérieure du noyau de stator (20) et prévue de façon adjacente à une seconde extrémité de la fente de remplissage d'axe q (21).

2. Moteur à réluctance synchrone à démarrage automatique selon la revendication 1, dans lequel la partie de blocage de flux magnétique est une fente de remplissage d'axe q (21) prévue dans la direction d'axe q, et la fente de remplissage d'axe q (21) est prévue pour s'étendre dans une direction circonférentielle du noyau de stator (20).

3. Moteur à réluctance synchrone à démarrage automatique selon la revendication 1, dans lequel le première rainure (22), la fente de remplissage d'axe q (21), et la deuxième rainure (23) sont agencées symétriquement par rapport à l'axe q ; et des segments transversaux de la première rainure (22) et de la deuxième rainure (23) sont rectangulaires, elliptiques, ou circulaires.

4. Moteur à réluctance synchrone à démarrage automatique selon la revendication 1, dans lequel une largeur totale de la première rainure (22) et de la deuxième rainure (23) dans la direction circonférentielle du noyau de stator (20) est inférieure à une largeur de la fente de remplissage d'axe q (21) dans la direction circonférentielle du noyau de stator (20).

5. Moteur à réluctance synchrone à démarrage automatique selon la revendication 1 ou 3, dans lequel une profondeur de la première rainure (22) ou de la deuxième rainure (23) dans une direction radiale du noyau de stator (20) est égale à H, dans lequel 0,5δ≤H≤10δ, δ est une largeur d'un entrefer entre le noyau de stator (10) et le noyau de stator (20).

6. Moteur à réluctance synchrone à démarrage automatique selon la revendication 1, dans lequel la partie de blocage de flux magnétique est une troisième rainure (24) prévue sur la surface circonférentielle extérieure du noyau de stator (20), et la troisième rainure (24) est prévue pour s'étendre dans la direction circonférentielle du noyau de stator (20) ;
dans lequel une profondeur maximum de la troisième rainure (24) dans la direction radiale du noyau de stator (20) est égale à H, dans lequel 0,5δ≤H≤10δ, δ est la largeur de l'entrefer entre le noyau de stator (10) et le noyau de stator (20) ;
dans lequel une forme de la troisième rainure (24) est une structure constituée d'au moins un segment parmi un segment linéaire droit ou un segment arqué.

7. Moteur à réluctance synchrone à démarrage automatique selon la revendication 1, dans lequel le noyau de stator (20) est pourvu d'une pluralité de fentes entailles (30), et les deux extrémités de chacune des fentes entailles (30) sont pourvues de fentes de remplissage (40), et une direction d'extension d'une fente de remplissage (40) est parallèle, ou à un angle, relativement à un axe d du noyau de stator (20) ;
dans lequel une fente entaille (30) est constituée d'un segment arqué partiel ou d'un segment linéaire droit, le segment arqué est agencé pour faire saillie vers un côté à l'opposé d'un trou d'arbre du noyau de stator (20), ou, la largeur de la fente entaille (30) est prévue pour augmenter progressivement le long des deux côtés de l'axe q ;
dans lequel une largeur de la fente entaille (30) est prévue pour augmenter progressivement le long des deux côtés de l'axe q ;
dans lequel une nervure de renfort (50) est prévue entre une extrémité de la fente entaille (30) et une fente de remplissage correspondante (40), une largeur de la nervure de renfort (50) est égale à L4, dans lequel 0,5δ≤L4≤δ, δ est la largeur de l'entrefer entre le noyau de stator (10) et le noyau de stator (20) ;
dans lequel il y a une distance L4 entre la fente de remplissage (40) et une périphérie extérieure du noyau de stator (20), et 0,5δ≤L4≤δ ;
dans lequel la fente entaille (30) et les fentes de remplissage (40) aux deux extrémités de la fente entaille (30) sont combinées pour former une couche barrière magnétique, et il y a au moins deux couches barrières magnétiques dans la direction radiale du noyau de stator (20) ;
dans lequel un rapport d'une somme des largeurs radiales de toutes les fentes entailles (30) dans la direction d'axe q et de la largeur radiale de la fente de remplissage d'axe q (21) dans la direction d'axe q relativement à une largeur de noyau effective du noyau de stator (20) est égale à Q1, et 0,3≤Q1≤0,6 ;
dans lequel toutes les fentes de remplissage (40) et la partie de blocage de flux magnétique et les fentes entailles (30), toutes les fentes de remplissage (40) et la fente de remplissage d'axe q (21) sont remplies avec un matériau conducteur et non magnétique.

8. Moteur à réluctance synchrone à démarrage automatique selon la revendication 7, dans lequel la fente entaille (30) a un segment arqué, et un radian du segment arqué de la fente entaille (30) est prévu pour diminuer progressivement dans une direction radiale à l'opposé du trou d'arbre du noyau de stator (20).

9. Moteur à réluctance synchrone à démarrage automatique selon la revendication 7, dans lequel la fente entaille (30) a des segments linéaires droits et un segment arqué, les segments linéaires droits de la fente entaille (30) sont situés aux deux extrémités du segment arqué, une longueur du segment linéaire droit est prévue pour diminuer progressivement dans la direction radiale à l'opposé du trou d'arbre du noyau de stator (20) ;
dans lequel le segment linéaire droit de la fente entaille (30) s'étend dans la direction d'axe d.

10. Moteur à réluctance synchrone à démarrage automatique selon la revendication 7, dans lequel la fente de remplissage (40) et la fente de remplissage d'axe q (21) sont remplies avec un matériau conducteur et non magnétique et pour communiquer avec des bagues d'extrémité conductrices (25) aux deux extrémités du noyau de stator pour former une structure de cage d'écureuil, et un matériau de la bague d'extrémité conductrice (25) est le même que le matériau remplissant la fente de remplissage (40) et la fente de remplissage d'axe q (21).

11. Moteur à réluctance synchrone à démarrage automatique selon la revendication 7, dans lequel la fente entaille (30) est constituée d'un segment arqué partiel et d'un segment linéaire droit, le segment arqué est agencé pour faire saillie vers un côté à l'opposé d'un trou d'arbre du noyau de stator (20), la largeur de la fente entaille (30) est prévue pour augmenter progressivement le long des deux côtés de l'axe q.

12. Moteur à réluctance synchrone à démarrage automatique selon la revendication 7, dans lequel la fente entaille (30) est constituée d'un segment arqué partiel et d'un segment linéaire droit, et le segment arqué est agencé pour faire saillie vers un côté à l'opposé d'un trou d'arbre du noyau de stator (20).

13. Moteur à réluctance synchrone à démarrage automatique selon la revendication 1 ou 3, dans lequel des profondeurs de la première rainure (22) et de la deuxième rainure (23) dans une direction radiale du noyau de stator (20) est égale à H, 0,5δ≤H≤10δ, δ est la largeur de l'entrefer entre le noyau de stator (10) et le noyau de stator (20).

14. Compresseur, comprenant un moteur à réluctance synchrone à démarrage automatique, **caractérisé en ce que** le moteur à réluctance synchrone à démarrage automatique est le moteur à réluctance synchrone à démarrage automatique selon l'une quelconque des revendications 1 à 13.
